(19) Europäisches Patentamt
European Patent Office
Office européen des brevets

(11) Veröffentlichungsnummer: **0 004 953**
**B1**

(12) # EUROPÄISCHE PATENTSCHRIFT

(45) Veröffentlichungstag der Patentschrift: **03.03.82**

(51) Int. Cl.³: **C 22 B 60/02, B 03 D 1/02**

(21) Anmeldenummer: **79101136.4**

(22) Anmeldetag: **12.04.79**

(54) **Verfahren und Vorrichtung zur selektiven Trennung des Urans von seinen Begleitmetallen und zu seiner Gewinnung.**

(30) Priorität: **19.04.78 DE 2817029**
**23.01.79 DE 2902516**

(43) Veröffentlichungstag der Anmeldung:
**31.10.79 Patentblatt 79/22**

(45) Bekanntmachung des Hinweises auf die Patenterteilung:
**03.03.82 Patentblatt 82/9**

(84) Benannte Vertragsstaaten:
**BE DE FR GB IT NL SE**

(56) Entgegenhaltungen:
**FR - A - 1 541 675**
**FR - A - 2 248 879**
**US - A - 2 750 254**

(73) Patentinhaber: **Heckmann, Klaus, Prof. Dr.**
**Zum Aichahof 20**
**D-8400 Regensburg (DE)**

(72) Erfinder: **Heckmann, Klaus Prof. Dr.**
**Carl-Thiel-Strasse 12**
**D-8400 Regensburg (DE)**
Erfinder: **Spurny, Jiri Dr.**
**Alfons Auer Strasse 16b**
**D-8400 Regensburg (DE)**

(74) Vertreter: **Kraus, Walter, Dr. et al,**
**Patentanwälte Dres. Kraus & Weisert**
**Irmgardstrasse 15**
**D-8000 München 71 (DE)**

**EP 0 004 953 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren und Vorrichtung zur selektiven Trennung des Urans von seinen Begleitmetallen und zu seiner Gewinnung

Die Erfindung betrifft ein Verfahren und eine Anordnung zusammenwirkender Vorrichtungsteile zur selektiven Trennung des Urans von seinen Begleitmetallen und zu seiner Gewinnung durch Behandlung einer sauren, wäßrigen Uranlösung mit einem Sammler, Aufschäumen durch Einblasen von Inertgas, Abtragen des Schaums, Isolierung von Uran und Rückgewinnung des Sammlers aus dem Schaum.

Die Bedeutung des Urans hat in den vergangenen Jahren immer mehr zugenommen, da es derzeit der wichtigste Kernbrennstoff ist. Der Bedarf an Uran steigt daher laufend.

In der Natur kommen Uranverbindungen in zahlreichen Gesteinen vor, jedoch sind die Konzentrationen an Uran sehr gering und liegen im allgemeinen unter 0,04%. Die Uranerze werden nach an sich bekannten Verfahren durch Flotation, Magnetscheidung und anderen Maßnahmen angereichert, und dann wird im allgemeinen das Uran aus den Erzen extrahiert.

Bei der Naßaufbereitung uranhaltiger Erze fallen Mutterlaugen an, die sehr geringe Konzentrationen an Uran enthalten, im Vergleich mit den Konzentrationen der Begleitmetalle, insbesondere Eisen, Aluminium und Calcium. Die verfügbaren Verfahren zur Gewinnung des Urans, z.B. Ionenaustauschverfahren oder Flüssigextraktionsverfahren, sind sehr zeit- und kostenaufwendig und umfassen mehrere Stufen.

In etwas anderer, aber grundsätzlich ähnlicher Form stellt sich das Problem der Rückgewinnung von Uran bei der naßmetallurgischen Aufbereitung von Abbränden aus Kernkraftwerken (im folgenden kurz KKW genannt). Hier ist der relative Anteil des Urans wesentlich größer als bei Armerzen.

Es besteht daher ein Bedarf nach einfachen Verfahren, mit denen man Uran selektiv von seinen Begleitmetallen, insbesondere Eisen, aber auch Aluminium und Calcium und anderen Metalle abtrennen kann.

In der DE—B—1 116 113 wird ein Flotationsverfahren für anorganische Ionen beschrieben, bei dem je nach der Ladung des zu flotierenden Ions ein anionisches oder kationisches Tensid als Sammler zu der ionenhaltigen Lösung zugegeben wird und bei dem dann das sich bildende, unlösliche Reaktionsprodukt unter Einblasen von Gas aufgeschwemmt und mit dem Schaum ausgetragen wird. Nach diesem Verfahren läßt sich grundsätzlich auch aus Lösungen von Uranylsulfat das Uran abtrennen (Beispiel 1 der DE—B—1 116 113). Enthält die Lösung neben Uran noch Eisen, so wird nach diesem Verfahren die Lösung vor der Flotation vorbehandelt: Es wird zu einer schwefelsauren Lösung zunächst solange Ammoniak hinzugefügt, bis $Fe(OH)_3$ ausfällt; sodann wird die Lösung mit Schwefelsäure wieder angesäuert, bis der $Fe(OH)_3$-Niederschlag sich gerade wieder auflöst. Dies ist bei pH-Werten zwischen ca. 3,7 und 4,5 der Fall. In diesem pH-Bereich liegt Eisen als $Fe^{3+}$ und Uran als Gemisch von $UO_2(SO_4)_2^{2-}$, $UO_2(SO_4)_3^{4-}$ und $UO_2^{2+}$ vor. Aus der im Beispiel Nr. 1 des bekannten Verfahrens geschilderten Versuchsführung ist zu schließen, daß der pH-Wert der Flotte grundsätzlich nicht unter 3,7 sinken soll. Dem liegt offenbar die Annahme zugrunde, daß bei steigender Säurekonzentration in zunehmendem Maße neben den Sulfatouranylaten auch Sulfatoferrate gebildet werden, die dann zusammen mit den Sulfatouranylaten flotieren und somit die Trennschärfe, des Verfahrens verringern können. Diese Forderung an den Prozeß verlangt in der Praxis während der Flotation eine sehr genaue pH-Regelung, die — wie in der vorliegenden Erfindung gezeigt wird — nicht notwendig ist.

Das genannte Verfahren wird in seiner Anwendbarkeit noch dadurch eingeschränkt, daß der Sammler in einer Konzentration unterhalb seiner kritischen Mizellkonzentration (cmc) zugesetzt werden muß, weil sonst die Wirksamkeit des Verfahrens erniedrigt ist. Sodann bedeutet die Einstellung eines pH-Wertes von ca. 3,7 vor der Flotation den Verlust des größten Teiles der zu Laugung von uranhaltigen Erzen erforderlichen Schwefelsäure (die niedrigsten $H_2SO_4$-Konzentrationen, die für das Laugen von Armerzen benötigt werden, liegen zwischen 0,1 und 0,5 Mol $l^{-1}$; im einzelnen richten sie sich nach der Zusammensetzung des Erzes).

Das bekannte Verfahren erwähnt nicht die Abtrennung von Uran aus Lösungen, die neben Uran und Eisen noch weitere Metallsalze enthalten.

Die Übertragung des bekannten Verfahrens auf schwefelsaure Rohlaugen von Armerzen (pH-Werte von ca 1) hat ergeben, daß die $NH_3$-Zugabe zur Bildung von Niederschlägen undefinierter Zusammensetzung führt, die sich beim darauf-folgenden Ansäuern mit $H_2SO_4$ erst bei pH-Werten zwischen 1 und 2 wieder lösen. Dies ist dadurch bedingt, daß die untersuchten Armerze neben Uran und Eisen noch weitere Metalle, insbesondere Aluminium, Titan, Mangan, Magnesium und Calzium enthalten. Die Herstellung homogener Lösungen mit pH-Werten unterhalb von 3,7 ist nicht möglich.

Das aus der DE—B—1 116 113 bekannte Verfahren kann offenbar nur unter besonders einfachen Randbedingungen eingesetzt werden. Für die Übertragung auf kompliziertere Systeme und auf technische Maßstäbe ist es nicht geeignet.

Der vorliegenden Erfindung liegt daher die Aufgabe zugrunde, ein einfaches Verfahren zur selektiven Trennung des Urans von seinen Begleitmetallen zur Verfügung zu stellen, das insbesondere für die Urangewinnung aus Laugen der naßmetallurgischen Aufbereitung von uranhaltigen Ergen sowie für die Rückgewinnung von Uran aus Kernkraftwerkabbränden geeignet ist und die Nachteile der bekannten Verfahren nicht besitzt.

Überraschenderweise wurde gefunden, daß die Gewinnung des Urans aus wäßrigen Lösungen

möglich ist, wenn man das Flotationsverfahren in einer uranhaltigen Salzsäurelösung ablaufen läßt und bei der Flotation ein kationisches Tensid verwendet. Die Flotation aus salzsaurer Lösung zeichnet sich durch außerordentlich hohe Geschwindigkeit aus. Sie ist bei geeigneter Prozeßführung in höchstens fünf Minuten beendet.

Überraschenderweise wurde weiterhin gefunden, daß Uran sich als Sulfatokomplex auch bei pH-Werten <3,7, also unmittelbar aus den Rohlaugen von Erzen in Gegenwart von Sulfatoferraten praktisch quantitativ ausflotieren läßt, wenn man hierzu kationische Tenside verwendet, die nur mit Sulfatouranylaten, nicht aber mit Sulfatoferraten schwerlösliche Niederschläge bilden. Die Abtrennung des Urans von Eisen in Gegenwart anderer Begleitmetalle ist hiernach im gesamten pH-Bereich zwischen 6 und 1 mit guter Ausbeute möglich. Die genaue Schwefelsäurekonzentration hängt von der Konzentration der Uranylionen ab. Als kationische Tenside eignen sich insbesondere das Cetylpyridiniumchlorid (bzw. Sulfat) und das Octadecylpyridiniumchlorid (bzw. Sulfat). Das bei der DE—B—1 166 113 verwendete Laurylpyridiniumchlorid bedingt außerordentlich lange Flotationszeiten und ergibt nur sehr niedrige Ausbeuten.

Überraschenderweise wurde außerdem gefunden, daß die Flotationsausbeute in schwefelsauren Lösungen sich durch die Zugabe von Alkalisulfat noch erhöhen läßt. Desgleichen kann man die Flotationsausbeute in salzsaurer Lösung durch die Zugabe von Alkali- oder Erdalkalichloriden erhöhen. Gegenstand der Erfindung ist ein Verfahren zur selektiven Trennung des Urans von seinen Begleitmetallen und zu seiner Gewinnung durch Behandlung einer wäßrigen Uranlösung mit einem Sammler, Aufschäumen durch Einblasen von Inertgas und Abtragen des Schaums, das dadurch gekennzeichnet ist, daß man zu einer uranhaltigen Lösung entweder Salzsäure und/oder Chloride in einer solchen Menge zugibt, daß das Uran komplexe Anionen vom Typ $(UO_2Cl_n)^{2-n}$ bildet (worin n 3 oder 4 bedeutet) oder Schwefelsäure und/oder Natriumsulfat in einer solchen Menge zugibt, daß das Uran komplexe Anionen vom Typ $UO_2(SO_4)_z^{2-2z}$ bildet (worin z 2 oder 3 bedeutet), ein kationisches Tensid zusammen mit der Säure oder nach Zugabe der Säure zu der Uranlösung gibt, die Lösung in mindestens einer Flotationszelle flotiert, in an sich bekannter Weise in Schaum- und Residuallösung trennt, und man zur Gewinnung des Urans aus dem Schaum den niederschlaghaltigen Schaum weitgehend entwässert, den Niederschlag in wenig Wasser suspendiert, die Suspension bis über den Krafft-Punkt des Niederschlages erwärmt, so daß eine homogene Lösung entsteht, aus der Lösung das Uran durch Erhöhung des pH-Wertes als Uranat ausfällt, den Niederschlag abtrennt und das tensidhaltige Filtrat nach Ansäuern wieder in den Flotationsprozeß rezirkuliert. Der Krafft-Punkt eines kationischen oder anionischen Tensids ist diejenige Temperatur, bei der die Konzentration einer gesättigten wäßrigen Tensidlösung im Gleichgewicht mit einem Tensidbodenkörper gerade die kritische Mycellkonzentration ist. Die Löslichkeit eines Tensids steigt oberhalb des Krafft-Punktes sehr steil an.

Das Uran bildet in Salzsäurelösungen komplexe Dioxochlorouranate der folgenden Formel:

$$(UO_2Cl_n)^{2-n}$$

in der n 3 oder 4 bedeutet.

In Schwefelsäurelösungen bildet es Uranylsulfatokomplexe der Formeln:

$$UO_2(SO_4)'', UO_2(SO_4)''''$$

Diese relativ stabilen Chlorokomplexe oder Sulfatokomplexe des $UO_2^{2+}$ reagieren mit kationischen Tensiden zu schwerlöslichen, feinkristallinen Niederschlägen.

Diese Eigenschaften des Urans ermöglichen seine selektive Ausscheidung in Form von feinen Niederschlägen aus Lösungen von Begleitmetallen oder aus Laugen der Naßaufbereitung von uranhaltigen Erzen oder aus Laugen der Aufbereitung von verbrauchten Brennstäben aus Kernreaktoren. Die Niederschläge werden aus der Lösung bzw. Lauge durch Mikroflotation schnell und quantitativ entfernt und in der Schaumlösung angereichert. Durch eine große Volumenreduktion (das Volumen der Schaumlösung beträgt höchstens 2% des ursprünglichen Volumens) bilden die ausgeschiedenen Teilchen größere Aggregate, die sich leicht durch einfache Filtration als Konzentrat abtrennen und weiterverarbeiten lassen.

Bei dem erfindungsgemäßen Verfahren verwendet man beim Einsatz von Salzsäure eine wäßrige Uranlösung, die eine Salzsäurekonzentration von ca. 0,5 bis 5 N, vorzugsweise 1 bis 3 N und am meisten bevorzugt etwa 2,5 N besitzt. Diese Salzsäurelösung kann in an sich bekannter Weise hergestellt werden, indem man uranhaltiges Erz mit Salzsäure auslaugt oder indem man zu vorliegenden Lösungen des Urans die entsprechende Salzsäuremenge zugibt. Bei Verwendung von salzsauren Lösungen empfiehlt sich zur Erhöhung der Flotationsaubeute die zusätzliche Verwendung von Alkali- oder Erdalkalichloriden. Sie können in Konzentrationen von $10^{-1}$ molar bis 5,0 molar eingesetzt werden. Analoges gilt für KKW-Abbrände. Die salzsäure Lösung kann gleichzeitig bis zu 1,0 N an Fluoridionen enthalten.

Bei dem erfindungsgemäßen Verfahren verwendet man beim Einsatz von Schwefelsäure eine wäßrige Uranlösung, die eine Schwefelsäurekonzentration von ca. $10^{-6}$ N bis 1,0 N, vorzugsweise $10^{-3}$ N bis 0,5 N und am meisten bevorzugt ca. 0,10 N, besitzt. Diese Schwefelsäurelösung kann in an sich

bekannter Weise hergestellt werden, indem man uranhaltiges Erz mit Schwefelsäure auslaugt oder indem man zu vorliegenden Lösungen des Urans die entsprechende Schwefelsäuremenge zugibt. Bei Verwendung von schwefelsauren Lösungen empfiehlt sich zur Erhöhung der Flotationsausbeute die zusätzliche Verwendung von Alkalisulfaten. Sie können in Konzentrationen von $10^{-6}$ molar bis 1,0 molar eingesetzt werden. Bei Verwendung von 0,1 N Schwefelsäure hat sich die Verwendung von 0,2 molarem Alkalisulfat am besten bewährt. Analoges gilt für KKW-Abbrände. Die schwefelsaure Lösung kann gleichzeitig bis zu 1,0 N an Fluoridionen enthalten.

Die Konzentration der Salz- bzw. Schwefelsäure kann ausschließlich an die Bedürfnisse der Laugung von Erzen angepaßt werden; für die Flotation selbst ist die Anwesenheit von Säure nicht wesentlich. Wesentlich ist vielmehr die Anwesenheit ausreichender Konzentration von Chlorid- bzw. Sulfat-Ionen.

Die komplexen Anionen des Urans lassen sich auf grundsätzlich bekannte Weise mit einem kationischen Tensid aus der Lösung leicht ausfällen und ausflotieren. Die Konzentration des verwendeten Tensids kann hierbei aber, anders als bei dem in der DE—B—1 166 113 genannten Verfahren, die kritische Mizellkonzentration weit überschreiten und ist nur dadurch begrenzt, daß das Löslichkeitsprodukt von Verbindungen aus Tensid und von Ionen der Begleitmetalle nicht überschritten werden darf.

Das Uran wird während eines ein- oder mehrstufigen Flotationsverfahrens von den es begleitenden Metallen selektiv abgetrennt. Die Begleitmetalle bilden mit Cl-oder $SO_4$-Ionen entweder keine Kompleze oder nur wenig stabile Komplexe. Wenn dreiwertiges Eisen in hohen Konzentrationen vorliegt, können eventuell geringe Mengen eines Chloro- oder Sulfatokomplexes des Eisens mit ausflotiert werden. In einem solchen Fall wird das dreiwertige Eisen in an sich bekannter Weise vor der Flotation zu zweiwertigem Eisen reduziert, dessen anionische Komplexe wesentlich labiler sind als die des dreiwertigen Eisens und deswegen unter gleichen Bedingungen schlechter flotieren.

Die relativ hohe Stabilität der Urankomplexe ermöglicht auf diese Weise die Trennung des Urans von fast allen Metallen, die es in der Natur begleiten, insbesondere von Eisen, Aluminium und Calcium. Das Verfahren kann kontinuierlich und diskontinuierlich durchgeführt werden.

Bei dem erfindungsgemäßen Verfahren verwendet man ein kationisches Tensid. Als kationisches Tensid kann man alle Tenside mit einer oder mehreren funktionellen Gruppen verwenden, die in wäßriger Lösung unter Bildung positiv geladener organischer Ionen ionisieren. Die Tenside müssen selektiv schwerlösliche Niederschläge mit anionischen Uranylkomplexen bilden; diese Niederschläge müssen einen niedrigen Krafft-Punkt haben und schwerer löslich sein als die Chloride bzw. die Sulfate der Tenside. Beispiele sind $C_{10}$—$C_{24}$-Alkylpyridiniumsalze, vorzugsweise $C_{14}$—$C_{18}$-Alkylpyridiniumsalze, in denen die Alkylgruppe geradkettig oder verzweigtkettig sein kann. Alkyldimethylnaphthylammoniumssalze, vorzugsweise mit $C_{12}$—$C_{18}$-Alkylgruppen, besonders bevorzugt die entsprechenden Sulfate und Chloride, Benzethonium, Dialkyldimethylammoniumsalze mit vorzugsweise $C_{12}$—$C_{18}$-Alkylgruppen (wobei die Summe der C-Atome in beiden Alkylgruppen mindestens 24 sein soll). Bevorzugt werden bei dem erfindungsgemäßen Verfahren N-Cetylpyridiniumchlorid und -sulfat sowie N-Octadecylpyridiniumchlorid und -sulfat verwendet. Als Tensid kann man auch Polyelektrolyte mit Tensidcharakter verwenden, die in der vorliegenden Anmeldung auch unter den Begriff "Tensid" fallen sollen. Man kann auch Gemische aus Tensid und Polyelektrolyt oder Gemische aus Tensiden verwenden.

Beispiele für derartige Polyelektrolyte mit Tensidcharakter sind N-Alkyl-polyvinyl-pyridiniumsalze der folgenden Formel:

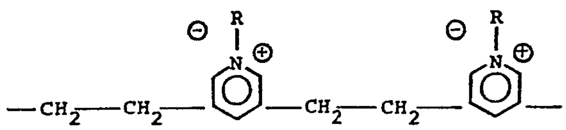

in der R eine geradkettige oder verzweigkettige Alkylgruppe mit 4 bis 24, vorzugsweise 8 bis 22, Kohlenstoffatomen und ⊖ ein negativ geladenes Ion bedeutet.

Die Menge an Tensid, die zu der uranhaltigen Schwefelsäure- bzw. Salzsäurelösung zugegeben wird, wird anhand von Vorversuchen bestimmt. Das Tensid muß mindestens in einer solchen Menge zugegeben werden, daß sich das Uran quantitativ ausscheidet. Im allgemeinen wird das Tensid in der 1- bis 10fachen molaren Menge, bezogen auf das Uran, zu der Uranlösung zugegeben. In salzsaurer Lösung verwendet man vorzugsweise die 1- bis 5fache, am meisten bevorzugt die 2- bis 3fache Molmenge, bezogen auf das Uran. Besonders gute Ergebnisse werden erhalten, wenn auf 2 Mol Uran 3 Mol Tensid verwendet werden. In schwefelsaurer Lösung verwendet man am besten die 4-5fache Molmenge, bezogen auf das Uran. Die Menge muß in jedem Fall so bemessen sein, daß das Löslichkeitsprodukt übershcritten wird. Das Tensid kann in wäßriger Lösung zugegeben werden. Die Verwendung von Tensid-Lösungen in organischen Lösungsmitteln wie sie in der DE—B—1 166 113 vorgeschlagen wird, ist nicht erforderlich. Ist die Löslichkeit des Tensids bei Raumtemperatur zu gering, so empfiehlt sich eine schwache Erwärmung bis über den Krafft-Punkt, der bei den im erfindungsgemäßigen Verfahren verwendeten Tensiden nur wenige Grade oberhalb der Zimmertemperatur liegt.

Es ist ratsam, das für die Fällung des Urans insgesamt erforderliche Tensid in mehreren kleineren Portionen zuzugeben.

Nach dem erfindungsgemäßen Verfahren kann man auch stark verdünnte Uranlösungen aufbereiten. Die Urankonzentration in der Ausgangslösung kann im Bereich von 0,1 bis 0,0001% liegen und unter Umständen sogar 0,000001% betragen.

Das Ausschäumen der Uran und Tensid enthaltenden Reaktionslösung erfolgt in an sich bekannter Weise; man verwendet zum Ausschäumen ein Inertgas, wie z.B. Stickstoff. Man kann jedoch auch Luft einsetzen. Das Gas kann auch in der Flotationszelle elektrolytisch erzeugt werden.

Das Reaktionsprodukt aus Tensid und Uranylchlorokomplex bzw. Uranylsulfatokomplex wird dann in an sich bekannter Weise in einer Flotationszelle ausflotiert und z.B. durch Filtration, Sedimentation oder Zentrifugieren abgetrennt.

Bei dem erfindungsgemäßen Verfahren trennt sich das Uran von

a) Metallen, die keine anionischen Komplexe bilden.

b) Metallen, die nur wenig stabile anionische Komplexe bilden und

c) Metallen, die anionische Komplexe annähernd derselben Stabilität wie $UO_2^{2+}$ bilden, jedoch mit Tensiden zu Salzen von höheren Löslichkeitsprodukten bzw. niedrigeren Krafft-Punkt reagieren.

Das erfindungsgemäße Verfahren wird so durchgeführt, daß das Tensid wiederverwendet werden kann. Der niederschlaghaltige Schaum wird beispielsweise durch Filtrieren oder Zentrifugieren so weit wie möglich entwässert, der Niederschlag in möglichst wenig Wasser suspendiert, die Suspension des Niederschlags bis dicht über den Krafft-Punkt des Niederschlags aus Tensid und anionischem Urankomplex erwärmt, so daß eine klare Lösung entsteht. Diese Lösung hat im allgemeinen einen pH-Wert zwischen 3 und 4. Man kann sie gegebenenfalls zur Entfernung von Verunreinigungen nochmals filtrieren. Dies ist jedoch nicht unbedingt erforderlich. Zur Erwärmung wird die Suspension vorzugsweise durch einen Wärmetauscher geleitet. Zu der noch warmen Lösung gibt man dann eine Base, vorzugsweise Ammoniak, hinzu, um das in Lösung befindliche Uran als Uranat auszufällen. Als Base kann man wäßriges Ammoniak, gasförmiges Ammoniak oder Natronlauge oder Kalilauge oder Kalkwasser oder andere Laugen verwenden. Diese Art der Prozeßführung unterscheidet sich von der in DE—B—1 166 113 beschriebenen Vorgehensweise durch das Erwärmen des Niederschlags mit wenig Wasser bis zum Entstehen einer klaren Lösung und durch die Verwendung von wäßrigen Lösungen von Basen zur Fällung des Urans als Uranat. Bei dem bekannten Verfahren wird der uranhaltige Niederschlag unmittelbar mit der alkoholischen Lösung einer Base versetzt. Die daraufhin einsetzende Umsetzung unter Bildung von Uranat verläuft also in einem heterogenen System und beansprucht unverhältnismäßig lange Zeiten. Die Herstellung homogener Lösungen ermöglicht die sofortige Reaktion des Tensid/Uran-Komplexes mit Base unter Bildung von Uranaten. Die Verwendung mäßig erwärmter wäßriger Lösungen von Basen ist kostengünstiger als die Verwendung alkoholischer Lösungen und gestattet eine übersichtlichere Prozeßführung. Unter anderem wird die Beeinflussung der Löslichkeit tensidhaltiger Niederschläge durch organische Lösungsmittel vermieden, was speziell bei der Rezyklierung der sauren Residuallösungen von Bedeutung ist.

Das Uran fällt also als Uranat aus und der Niederschlag wird in an sich bekannter Weise abgetrennt, beispielsweise abfiltriert, gewaschen und weiterverarbeitet. Man erhält ein tensidhaltiges Filtrat, das nach Ansäuren wieder in den Flotationsprozeß rezirkuliert werden kann.

Bei dem erfindungsgemäßen Verfahren ist es weiterhin möglich, die Schwefelsäurelösung nach Abtrennung des Urans noch mehrfach zur Laugung von Erz einzusetzen. Die Anzahl der Zyklen hängt von der Zusammensetzung des Erzes ab.

Es ist somit ein wesentlicher Vorteil des erfindungsgemäßen Verfahrens, daß — zumindest bei Verwendung schwefelsaurer Lösungen — sämtliche bei dem Verfahren verwendeten Chemikalien nicht in das Abwasser abgegeben werden müssen, sondern sich auf einfache und billige Weise so aufbereiten lassen, daß sie bei dem Verfahren wiederverwendet werden können.

In der beigefügten Zeichnung wird das erfindungsgemäße Verfahren schematisch dargestellt. Bei dem in der Zeichnung dargestellten Verfahren wird Erz mit einer $H_2SO_4$-Lösung in dem Extraktor 1 ausgelaugt. Die uranhaltige Lösung wir in den mit einer Rührvorrichtung 2 ausgerüsteten Homogenisator 3 zusammen mit einer Lösung eines geeigneten Tensids geleitet. Die Tensidkonzentration hängt von dem Urangehalt und der Zusammensetzung der Lauge ab und muß in einem Vorversuch festgelegt werden. In dem Homogenisator 3 reagieren die Dioxosulfatouranationen sofort mit den grenzflächenaktiven Ionen des Tensids unter Bildung von schwerlöslichen Niederschlägen.

Aus dem Homogenisator 3 wird die Lösung der Flotationszelle 4 zugeführt. Hier wird die Lösung durch relativ intensives Begasen in Schaum- und Residuallösung aufgetrennt. Der Schaum wird in eine Trennvorrichtung 5 (Fließband, Filtration, Sedimentation, Zentrifuge) geleitet und dort entwässert. Das hier anfallende Filtrat hat ein Volumen von weniger als 1% des Volumens der ursprünglichen Lauge und enthält praktische kein Uran. Wegen seines hohen Tensidgehalts wird es in den Homogenisator 3 rezirkuliert.

Der Niederschlag aus Tensid und Uranylsulfatokomplex wird in der Suspensionsvorrichtung 6 mit wenig Wasser suspendiert und vorsichtig in einer Erwärumungsvorrichtung 7, z.B. einem Wärmeaustauscher, erwärmt, bis der Niederschlag gerade in Lösung geht. Die Lösung wird in eine Ausfällungsvorrichtung 8 geleitet, wo der pH-Wert der noch sauren Lösung durch Zugabe einer Base, z.B. $NH_3$, gerade so weit erhöht wird, daß das Uranat als schwerlösliches Uranat, z.B. Ammoniumuranat, ausfällt. Der Uranatniederschlag, beispielsweise der Ammoniumuranatniederschlag, wird in einer Trennvorrichtung 9, beispielsweise in einer Filtrationsvorrichtung, abgetrennt. Das Filtrat wird mit $H_2SO_4$ wieder angesäuert.

Aus dieser Lösung kristallisiert beim Abkühlen das Tensid als Sulfat in kurzer Zeit aus. Es kann entweder in reiner Form zurückgewonnen werden oder es kann vor der Kristallisation in den Homogenisator 3 rezirkuliert werden.

Die in der Flotationszelle 4 verbleibende Residuallösung kann — je nach ihrer Zusammensetzung — entweder erneut zur Extraktion (Extraktor 1) von Erz verwendet werden oder — zur Rückgewinnung von $H_2SO_4$ nach grundsätzlich bekannten Verfahren — der Aufbereitungsanlage 10 zugeführt werden. Die rückgewonnen Schwefelsäure gelangt wiederum in den Extraktor 1.

Durch geeignete Auswahl der Konzentration an Beschickungslösung und durch die Wahl und die geeignete Dosierung des Tensids ist das Verfahren variabel und im Einzelfall leicht optimierbar. Man kann beispielsweise die Flotation in nur einer Stufe durchführen oder man kann mehrere Flotationszellen hintereinanderschalten. Die für das erfindungsgemäße Verfahren wesentlichen Reagenzien, Schwefelsäure und kationisches Tensid, lassen sich praktisch vollständig rezirkulieren.

Die folgenden Beispiele erläutern die Erfindung.

Beispiel 1

In diesem Beispiel wird die flotative Isolierung von Uran aus wäßrigen Lösungen von Dioxochlorouranaten erläutert.

0,042 g $UO_2(NO_3)_2.6H_2O$ (entsprechend 20 mg Uran) werden in 450 ml 3,0 N HCl gelöst. In dieser Lösung liegt das Uran als anionischer Komplex $(UO_2Cl_4)^{2-}$ vor. Die Lösung enthält außer Uran keine anderen Metalle.

0,09 g Cetylpyridiniumchlorid-Monohydrat (CPCl) werden in 50 ml 3,0 N HCl gelöst. Die Tensidlösung wird mit der Uranlösung vermischt. Aus der erhaltenen Lösung werden 10 ml für die analytische Uranbestimmung abpipettiert.

Nach einigen Minuten trübt sich die Lösung aus Uran und Tensid. Die Intensität der Trübung nimmt mit der Zeit zu und ist nach etwa 20 min konstant. Die Lösung wird dann in eine Flotationszelle geleitet. Bei Zimmertemperatur wird mit Stickstoff aus einer G2-Fritte flotiert. Die Durchflußgeschwindigkeit beträgt ca. 200 ml/min. Der entstehende Schaum wird in einer Höhe von ca. 20 cm über dem ursprünglichen Spiegel der Flüssigkeitssäule abgesaugt. Nach einer Flotationszeit von 25 min ist das Tensid fast vollständig ausgeschäumt. Die Flotation wird beendet. Die Volumina an Schaum- und Residuallösung werden bestimmt.

Aus der Schaumlösung scheiden sich Assoziate Uranylat/Tensid ab. Sie werden abzentrifugiert und analysiert. Die Residuallösung wird eingedampft und der Rückstand wird ebenfalls analysiert. Nach Zerstörung des Tensids durch Glühen wird der Urangehalt beider Proben spektrophotometrisch mit Arsenazo 300 in 0,1N HCl bestimmt. Die analytischen Ergebnisse sind in der folgenden Tabelle I zusammengefaßt.

TABELLE I

| | V (ml) | C (mg/ml) | M (mg) | % |
|---|---|---|---|---|
| Ausgangslösung | 490 | 0,0400 | 19,60 | |
| Schaumlösung | 11 | 1,6471 | 18,12 | 92,45 |
| Residuallösung | 479 | 0,0023 | 1,10 | 5,62 |
| | | | | Verlust: 1,93 |

Anreicherungskoeffizient/ $C_F/C_0 = 41,177$
Volumenreduktionsfaktor $V_0/V_F = 44,545$

In dieser und den folgenden Tabellen werden die folgenden Symbole verwendet:
V = Volumen (ml)
M = gesamte Metallmenge im Volumen V (mg)
C = Konzentration (mg/ml)
O = ursprüngliche Lösung
F = Schaumlösung
R = Residuallösung.

Beispiel 2

In diesem Beispiel soll die flotative Abtrennung von Uran aus wäßrigen Lösungen erläutert werden, die neben Uran noch Eisen enthalten.

Es werden zwei Lösungen (A) und (B) hergestellt. Die Lösung A enthält 20 mg Uran und 20 mg Eisen in 450 ml 3,0N HCl. Die Lösung B enthält 20 mg Uran und 200 mg Eisen in 450 ml 3,0N HCl.

Beide Lösungen werden mit je 50 ml der in Beispiel 1 beschriebenen Tensidlösung, die 0,09 g CPCl in 3,0N HCl enthält, vermischt. Aus beiden Lösungen wird das Uran, wie in Beispiel 1 beschrieben, abflotiert. Die Aufbereitung der Schaum- und Residuallösung erfolgt ebenfalls wie in Beispiel 1 beschrieben. Uran und Eisen werden also in ihre Nitrate überführt.

Die Nitrate werden in destilliertem Wasser gelöst, das Eisen wird mit Natriumcarbonat ausgefällt und der Niederschlag wird abfiltriert, mit halb-konzentrierter HCl aufgenommen und das Eisen wird durch Titration mit Dichromat bestimmt. Der pH-Wert des alkalischen Filtrats der Eisenniederschläge wird auf 4 eingestellt. Das Uran wird mit Natriumhydroxid als Natriumdiuranat ausgefällt und abfiltriert. Der Niederschlag wird in 0,1N HCl gelöst, und das Uran wird spektrophotometrisch bestimmt. Die analytischen Ergebnisse sind in Tabelle II zusammengefaßt.

TABELLE II

| | V (ml) | M (mg) | | C (mg/ml) | | % | | U/Fe |
|---|---|---|---|---|---|---|---|---|
| | | U | Fe | U | Fe | U | Fe | |
| Ausgangslösung A: | 20 mg U – 0,0422 g $UO_2(NO_3)_2 \cdot 6H_2O$<br>20 mg Fe– 0,1447 g $Fe(NO_3)_3 \cdot 9H_2O$<br>0,09 g N-Cetylpyridiniumchlorid (Monohydrat) | | | | | | | |
| Schaumlösung | 8,5 | 18,98 | 0,45 | 2,23 | 0,053 | 94,9 | 2,25 | 42,07 |
| Residuallösung | 491,5 | 0,52 | 18,23 | 0,001 | 0,037 | 2,6 | 91,15 | |
| Ausgangslösung B: | 20 mg U – 0,0422 g $UO_2(NO_3)_2 \cdot 6H_2O$<br>200 mg Fe– 1,447 g $Fe(NO_3)_3 \cdot 9H_2O$<br>0,12 g N-Cetylpyridiniumchlorid (Monohydrat) | | | | | | | |
| Schaumlösung | 9,0 | 18,39 | 0,63 | 2,043 | 0,07 | 91,95 | 3,15 | 29,19 |
| Residuallösung | 491 | 0,32 | 197,2 | 0,0006 | 0,4016 | 0,16 | 98,6 | |

Beispiel 3

In diesem Beispiel soll die flotative Abtrennung von Uran aus wäßrigen Lösungen erläutert werden, die neben Uran noch Calcium und Aluminium enthalten.

Uran wird in der Natur außer von Eisen fast immer von Calcium und Aluminium begleitet. Obgleich beide Metalle nicht zur Bildung von Chlorokomplexen neigen, kann doch ihre relativ hohe Konzentration in den Laugen von Uran-Armerzen sowohl die Ausbeute an Uran bei der Flotation erniedrigen als auch die Eigenschaften des Schaums negativ beeinflussen.

0,0422 g $UO_2(NO_3)_2.6H_2O$ (20 mg U) 0,7332 g $CaCl_2.2H_2O$ (200 mg Cal), 2,4682 g $Al_2(SO_4)_3.18H_2O$ (200 mg Al), 0,1 g N-Cetylpyridiniumchlorid (Monohydrat) werden in 500 ml 3,0N HCl gelöst. Die Flotation und die Aufbereitung der Schaum- und Residuallösung erfolgen, wie in Beispiel 1 beschrieben. Die analytischen Ergebnisse sind in der folgenden Tabelle III zusammengefaßt.

TABELLE III

| | V(ml) | M(mg) | C(mg/ml) | % |
|---|---|---|---|---|
| Ausgangslösung | 490 | 19,6 | 0,04 | |
| Schaumlösung | 11,5 | 18,49 | 1,61 | 94,33 |
| Residuallösung | 478,5 | 0,5 | 0,001 | 2,55 |
| | | | | Verlust: 3,12 |

Beispiel 4

In diesem Beispiel wird die flotative Abtrennung von Uran aus uranhaltiger Lauge erläutert.

500 g gemahlenes Uranerz, dessen Zusammensetzung in der folgenden Tabelle IV angegeben ist, werden in 5 l 1,5N HCl 90 min bei Zimmertemperatur ausgelaugt. Danach wird das Erz abfiltriert. In einer 100 ml-Probe des Filtrats wird die Urankonzentration analytisch bestimmt.

Die Lauge wird dem Homogenisator zugeführt und mit Tensidlösung [CPCl, Cetylpyridiniumchlorid (Monohydrat, 0,02 g/m)] unter ständigem Rühren versetzt. Das Volumenverhältnis von Lauge zu Tensidlösung wird so gewählt, daß $UO_2^{2+}$ und CPCl in einem Aquivalenzverhältnis von 2:3 stehen. Danach wird die Lösung mit einer Geschwindigkeit von 40 ml/min in die Flotationszelle geleitet. Die Flotation läuft hier ebenfalls bei Zimmertemperatur und bei einer $N_1$-Durchflußgeschwindigkeit von 500 bis 600 ml/min ab.

Die Schaumlösung, insgesamt 78 ml, wird nach der Flotation abfiltriert und das Sediment getrocknet und gewogen. Das Konzentrat wird nach Zerstörung des Tensids (Glühen) in konzentrierter Salpetersäure gelöst. Nach dem Abscheiden von verbliebenen Begleitmetallen wird das Uran dann spektrophotometrisch bestimmt. Die Ergebnisse sind in Tabelle IV zusammengefaßt.

TABELLE IV

Ergebnisse der kontinuierlichen Flotation von Uran aus uranhaltiger Armerzlauge

| | |
|---|---|
| Fraktion: 256 bis 900 Maschen/$cm^2$ (Prüfsieb DIN 1171) | |
| *Uranhaltiges Erz* | |
| Uranmenge in 500 g Erz, g | 0,7 |
| Gew.% Uran | 0,14 |
| *Uranhaltige Lauge* | |
| Urankonzentration, mg/ml | $12,64 \times 10^{-2}$ |
| Uranmenge in 4900 ml Lauge, g | 0,6194 |
| Gesamtmenge des ausgelaugten Urans in % des gesamten Urans, % | 88,48 |

TABELLE IV (Fortsetzung)
Ergebnisse der kontinuierlichen Flotation von Uran aus uranhaltiger Armerzlauge

| | |
|---|---|
| *Konzentrat* | |
| Menge an Konzentrat, g | 2,8832 |
| Menge an Uran im Konzentrat, g | 0,5917 |
| Anteil an Uran im Konzentrat, % | 20,52 |
| Anteil des Urans im Konzentrat bei Verwendung äquivalenter Mengen von $UO_2Cl_4$ und CPCl, % | 22,5188 |
| Ausbeute, bezogen auf | |
| (a) Uranmenge im Erz, % | 84,53 |
| (b) Uranmenge in der Lauge, % | 95,52 |
| *Residuallösung* | |
| Volumen, ml | 4822 |
| Urankonzentration, mg/ml | $6{,}72 \times 10^{-3}$ |
| Uranmenge, g | 0,0324 |
| Anteil an Uran, bezogen auf die Uranmenge in der Lauge, % | 5,47 |
| Menge an verbrauchtem Tensid, g | 2,57 |

Beispiel 5

In 500 ml 0,1N $H_2SO_4$ wurden 214,6 mg $UO_2SO_4 \cdot 2{,}5H_2O$ gelöst. Die Lösung wurde sodann mit 716 mg Cetylpyridiniumchlorid (Monohydrat) in 5 ml Äthanol versetzt und 2 h mit einem Magnetrührer gerührt. Danach wurde die Trübe in ein Flotationsrohr übertragen und mit Stickstoff begast. Die durchschnittliche Durchflußgeschwindigkeit des Gases betrug 150 ml/min. Der gebildete Schaum wurde während des Prozesses durch einen Trichter und mit Hilfe einer Wasserstrahlpumpe in einen 250 ml-Kolben abgesaugt. Am Ende der Flotation wurde der Inhalt der Vorlage filtriert. Der Rückstand wurde getrocknet, abgewogen und analysiert. Die Ergebnisse sind in Tabelle V zusammengefaßt.

TABELLE V

| | |
|---|---|
| Urangehalt in Ausgangslösung | 119 mg/500 ml |
| Flotationsdauer | 65 min |
| Volumen der Schaumlösung | 16 ml |
| Gewicht des Niederschlags | 921 mg |
| Urangehalt im Niederschlag | 116,9 mg |
| Uranausbeute | 98,23% |

Beispiel 6

In 500 ml 0,1N $H_2SO_4$ wurden 199,9 mg $Fe_2(SO_4)_3$ gelöst. Die Lösung wurde mit 716 mg Cetylpyridiniumchlorid (Monohydrat) in 5 ml Äthanol versetzt und 2 h gerührt. Nach dem Rühren wurde in der Lösung keine Trübung beobachtet. Die Lösung wurde in ein Flotationsrohr übertragen und mit Stickstoff und mit der gleichen Durchflußgeschwindigkeit wie im Beispiel 1 flotiert. Die Schaumlösung war ebenfalls vollständig klar. Es wurden von der Schaum- und von der Residuallösung je 10 ml abpipettiert, abgedampft und die Rückstände nach der Zerstörung des Tensids auf Eisen hin analysiert. Die Ergebnisse sind in Tabelle VI zusammengefaßt.

TABELLE VI

| | |
|---|---|
| Eisengehalt in Ausgangslösung | 27,9 mg |
| Konzentration der Ausgangslösung ($C_o$) | 0,0558 mg/ml |
| Flotationsdauer | 120 min |
| Volumen der Schaumlösung | 84 ml |
| Eisengehalt in der Residuallösung | 22,9 mg |
| Konzentration der Residuallösung | 0,05504 mg/ml |
| Eisengehalt in der Schaumlösung | 4,78 mg |
| Konzentration der Schaumlösung ($C_F$) | 0,0569 mg/ml |
| Anreicherungskoeffizient $C_F/C_o$ | 1,019 |

Beispiel 7

In einem von zwei Kolben mit 500 ml 0,1N $H_2SO_4$ wurden 214,6 mg $UO_2SO_4.2H_2O$ und 199,9 mg $Fe_2(SO_4)_3$ (Lösung 1), in dem anderen Kolben 214,6 mg $UO_2SO_4.2H_2O$ und 1999 mg $Fe_2(SO_4)_3$ (Lösung 2) gelöst. Die Lösungen wurden mit je 716 mg Cetylpyridiniumchlorid (Monohydrat) in 5 ml Äthanol versetzt und 2 h lang gerührt. Danach wurde in der gleichen Art wie im Beispiel 1 flotiert und aufbereitet. Die Ergebnisse der Analyse sind in Tabelle VII zusammengefaßt.

TABELLE VII

| | Lösung 1 | Lösung 2 |
|---|---|---|
| Urangemenge in Ausgangslösung | 119 mg | 119 mg |
| Eisenmenge in Ausgangslösung | 55,8 mg | 558 mg |
| Verhältnis U/Fe | 2,13 | 0,213 |
| Flotationsdauer | 40 min | 35 min |
| Gewicht des Niederschlags | 932 mg | 928 mg |
| Uranmenge im Niederschlag | 115,4 mg | 114,4 mg |
| Eisenmenge im Niederschlag | 2,3 mg | 3,8 mg |
| Verhältnis U/Fe | 50,13 | 30,10 |
| Uranausbeute | 96,9% | 96,13% |

## Patentansprüche

1. Verfahren zur selektiven Trennung des Urans von seinen Begleitmetallen und zu seiner Gewinnung durch Behandlung einer wäßrigen Uranlösung mit einem Sammler, Aufschäumen durch Einblasen von Gas und Abtragen des Schaums, dadurch gekennzeichnet, daß man zu einer uranhaltigen Lösung Salzsäure und/oder Alkali- bzw. Erdalkalichloride in einer solchen Menge zugibt, daß das Uran komplexe Anionen vom Typ $(UO_2Cl_n)^{2-n}$ bildet (worin n 3 oder 4 bedeutet), oder Schwefelsäure und/oder Natriumsulfat in einer solchen Menge zugibt, daß das Uran komplexe Anionen vom Typ $UO_2(SO_4)_z^{2-2z}$ bildet (worin z 2 oder 3 bedeutet), ein kationisches Tensid zusammen mit der Säure oder nach der Zugabe der Säure zu der Uranlösung gibt, die Lösung in mindestens einer Flotationszelle flotiert, in an sich bekannter Weise in Schaum- und Residuallösung trennt, man zur Gewinnung des Urans aus dem Schaum den niederschlaghaltigen Schaum weitgehend entwässert, den Niederschlag in wenig Wasser suspendiert, die Suspension bis über den Krafft-Punkt des Niederschlags erwärmt, so daß eine homogene Lösung entsteht, aus der Lösung das Uran durch Erhöhung des pH-Wertes als Uranat ausfällt, den Niederschlag abtrennt und das tensidhaltige Filtrat nach Ansäuern wieder in den Flotationsprozeß rezirkuliert.

2. Verfahren nach Anspruch 1, dadurch gekennzeichnet, daß die wäßrige Uranlösung bei der Zugabe der Salzsäure eine 0,5N bis 5N wäßrige Salzsäurelösung ist.

3. Verfahren nach Anspruch 1, dadurch gekennzeichnet, daß die wäßrige Uranlösung bei der Zugabe von Schwefelsäure eine $10^{-6}$ N bis 1,0 N wäßrige Schwefelsäurelösung ist.

4. Verfahren nach Anspruch 2, dadurch gekennzeichnet, daß die wäßrige Uranlösung bei der Zugabe von Salzsäure sowohl 0,5 N bis 5,0 N an Salzsäure als auch 0,1 N bis 5,0 N an Alkalichlorid bzw. Erdalkalichlorid ist.

5. Verfahren nach Anspruch 3, dadurch gekennzeichnet, daß die wäßrige Uranlösung bei der Zugabe von Schwefelsäure sowohl $10^{-6}$ N bis 1,0 N an Schwefelsäure als auch $10^{-6}$ N bis 1,0 N an Natriumsulfat ist.

6. Verfahren nach Anspruch 1, 2, 3 oder 4, dadurch gekennzeichnet, daß man als Tensid langkettige Alkyldimethylnaphtylammoniumsalze ($C_{12}$—$C_{18}$), Dialkyldimethylammoniumsalze ($C_{12}$—$C_{18}$), Alkylpyridiniumsalze ($C_{14}$—$C_{18}$) oder Gemische dieser Verbindungen verwendet, wobei es sich bei den langkettigen Alkylresten um gerade oder verzweigte Ketten handelt.

7. Verfahren nach mindestens einem der Ansprüche 1, 2, 3, 4 oder 5, dadurch gekennzeichnet, daß man als Tensid N-Cetylpyridiniumchlorid oder N-Octadecylpyridiniumchlorid verwendet.

8. Verfahren nach mindestens einem der Ansprüche 1, 2, 3, 4, 5 oder 6, dadurch gekennzeichnet, daß man das Tensid in der 1- bis 10fachen äquivalenten Menge, bezogen auf das Uran, verwendet.

9. Verfahren nach mindestens einem der vorhergehenden Ansprüche, dadurch gekennzeichnet, daß das Verfahren kontinuierlich durchgeführt wird.

10. Verfahren nach mindestens einem der Ansprüche 1 bis 7, dadurch gekennzeichnet, daß mehrere Flotationszellen in Reihe und/oder parallel geschaltet verwendet werden.

11. Verfahren nach mindestens einem der Ansprüche 1 und 2 bis 9, dadurch gekennzeichnet, daß man zum Aufschäumen ein Inertgas (wie Stickstoff) oder Luft oder elektrolytisch erzeugte Gasblasen verwendet.

12. Verfahren nach mindestens einem der vorhergehenden Ansprüche, dadurch gekennzeichnet, daß die aufzubereitende Lösung neben Uran noch Eisen, Calcium, Aluminium und/oder andere Metalle in geringer Konzentration und gegebenenfalls Fluoridionen enthält.

13. Verfahren nach mindestens einem der vorhergehenden Ansprüche, dadurch gekennzeichnet, daß bei Anwesenheit von $Fe^{3+}$ dieses vor der Abtrennung des Urans zu $Fe^{2+}$ reduziert wird.

14. Vorrichtung zur Durchführung des Verfahrens nach einem der Ansprüche 1 bis 12, gekennzeichnet durch einen Extraktor (1), einen mit einer Rührvorrichtung (2) versehenen Homogenisator (3), eine Flotationszelle (4), eine Trennvorrichtung (5), eine Suspensionsvorrichtung (6), eine Erwärmungsvorrichtung (7), eine Ausfällungsvorrichtung (8), eine Trennvorrichtung (9) und eine Säureaufbereitungsanlage (10), wobei die Vorrichtungsteile (1), (3), (4), (5), (6), (7), (8) und (9) in dieser Reihenfolge miteinander verbunden sind und die Säureaufbereitungsanlage (10) zwischen die Flotationszelle (4) und den Extraktor (1) geschaltet ist.

**Claims**

1. A process for selectively separating uranium from accompanying metals and for recovery thereof by the steps of treating an aqueous uranium solution with a collector, foaming through injection of gas, and removal of the foam, characterized by the steps of: adding to an uranium containing solution either hydrochloric acid and/or alkali chlorides and alkaline earth chlorides, respectively, in such an amount that the uranium forms complex anions of the type $(UO_2Cl_n)^{2-n}$ wherein n is 3 or 4, or sulfuric acid and/or sodium sulfate in such an amount that the uranium forms complex anions of the type $UO_2(SO_4)_z{}^{2-2z}$ wherein z is 2 or 3; adding to the uranium solution a cationic tenside either together with the acid or after addition of the acid; floating the solution in at least one flotation cell; dividing the solution in a manner known per se into foam solution and residual solution; recovering uranium from the foam by substantially dehydrating the sediment containing foam; suspending the sediment in a small quantity of water; heating the suspension above the Krafft point of the sediment, thus forming a homogeneous solution; precipitating uranium in the form of uranate from the solution by raising the pH; separating the precipitate; and, after acidification, recycling the tenside containing filtrate to the flotation step.

2. The process according to Claim 1 wherein, on addition of hydrochloric acid, said aqueous uranium solution is an 0.5N to 5N aqueous hydrochloric acid solution.

3. The process according to Claim 1 wherein, on addition of sulfuric acid, said aqueous uranium solution is a $10^{-6}$N to 1.0N aqueous sulfuric acid solution.

4. The process according to Claim 2 wherein, on addition of hydrochloric acid, said aqueous uranium solution is 0.5N to 5.0N in hydrochloric acid as well as 0.1N to 5.0N in alkali chloride and alkaline earth chloride, respectively.

5. The process according to Claim 3 wherein, on addition of sulfuric acid, said aqueous uranium solution is $10^{-6}$N to 1.0N in sulfuric acid as well as $10^{-6}$N to 1.0N in sodium sulfate.

6. The process according to Claim 1, 2, 3 or 4 wherein long-chain alkyl dimethylnaphthyl ammonium salts ($C_{12}$—$C_{18}$), dialkyl dimethyl ammonium salts ($C_{12}$—$C_{18}$), alkyl pyridinium salts

($C_{14}$—$C_{18}$) or mixtures thereof are used as tensides, said long-chain alkyl radicals being straight or branched chains.

7. The process according to at least one of Claims 1, 2, 3, 4 or 5 wherein N-cetyl pyridinium chloride or N-octadecyl pyridinium chloride is used as tenside.

8. The process according to at least one of Claims 1, 2, 3, 4, 5 or 6 wherein the tenside is used in 1 to 10 times the equivalent amount based on the uranium.

9. The process according to at least one of the preceding claims wherein said process is conducted continuously.

10. The process according to at least one of Claims 1 to 7 wherein a number of flotation cells connected in series and/or in parallel are employed.

11. The process according to at least one of Claims 1 and 2 to 9 wherein an inert gas (such as nitrogen) or air or electrolytically formed gas bubbles are used for the foaming operation.

12. The process according to at least one of the preceding claims wherein the solution to be processed comprises iron, calcium, aluminum and/or other metals in minor concentrations as well as, optionally, fluoride ions in addition to uranium.

13. The process according to at least one of the preceding claims wherein, before separation of the uranium, any $Fe^{3+}$ present is reduced to $Fe^{2+}$.

14. An apparatus for carrying out the process according to any one of Claims 1 to 12, characterized by an extractor (1), homogenizer (3) with stirrer (2), flotation cell (4), separator (5), suspending unit (6), heater (7), precipitator (8), separator (9), and acid-treating unit (10), said elements being connected to each other in the order (1), (3), (4), (5), (6), (7), (8) and (9), and the acid-treating unit (10) being interposed between flotation cell (4) and extractor (1).

**Revendications**

1. Procédé pour la séparation sélective de l'uranium des métaux l'accompagnant et sa récupération par traitement d'une solution aqueuse d'uranium par un collecteur, en la faisant mousser par injection de gaz et en enlevant, lequel procédé est caractérisé en ce qu'on ajoute à une solution contenant de l'uranium, de l'acide chlorhydrique et/ou des chlorures alcalins ou alcalino-terreux en quantité telle que l'uranium forme des anions complexes du type $(UO_2Cl_n)^{2-n}$ (dans lequel *n* est égal à 3 ou 4), ou de l'acide sulfurique et/ou du sulfate de sodium en quantité telle que l'uranium forme des anions complexes du type $UO_2(SO_4)_z^{2-2z}$ (dans lequel *z* est égal à 2 ou 3), en ce que l'on ajoute à la solution d'uranium un surfactif cationique, en même temps que l'acide ou après l'addition de l'acide, en ce que l'on soumet la solution à la flottation dans au moins une cellule de flottation, et en ce qu'on sépare la solution de manière connue en elle-même en mousse et solution résiduelle, en ce que pour tirer l'uranium de la mousse, on déshydrate dans une large mesure la mousse contenant le précipité, en ce que l'on met le précipité en suspension dans un peu d'eau, en ce que l'on chauffe la suspension jusqu'au dessus du point de Krafft du précipité en sorte qu'il se forme une solution homogène, en ce que l'on précipite l'uranium de la solution sous forme d'uranate en élevant le pH, en ce que l'on sépare le précipité et en ce que l'on recycle le filtrat contenant du surfactif, après l'avoir acidifié, dans le processus de flottation.

2. Procédé selon la Revendication 1, caractérisé en ce que la solution aqueuse d'uranium, lors de l'addition de l'acide chlorhydrique, est une solution aqueuse d'acide chlorhydrique 0,5N à 5N.

3. Procédé selon la Revendication 1, caractérisé en ce que la solution aqueuse d'uranium, lors de l'addition de l'acide sulfurique, est une solution aqueuse d'acide sulfurique $10^{-6}$N à 1,0N.

4. Procédé selon la Revendication 2, caractérisé en ce que la solution d'uranium, lors de l'addition de l'acide chlorhydrique, est à la fois 0,5N à 5,0N en acide chlorhydrique et 0,1N à 5,0N en chlorure alcalin ou en chlorure alcalino-terreux.

5. Procédé selon la Revendication 3, caractérisé en ce que la solution aqueuse d'uranium, lors de l'addition de l'acide sulfurique, est à la fois $10^{-6}$N à 1,0N en acide sulfurique et $10^{-6}$N à 1,0N en sulfate de sodium.

6. Procédé selon l'une quelconque des Revendications 1 à 4, caractérisé en ce que l'on utilise comme surfactif, des sels d'alkyldiméthylnaphtylammonium à longue chaîne ($C_{12}$ à $C_{18}$), des sels de dialkyldiméthylammonium ($C_{12}$ à $C_{18}$), des sels d'alkylpyridinium ($C_{14}$ à $C_{18}$) ou des mélanges de ces composés, les radicaux alkyle à longue chaîne étant des chaînes droites ou ramifiées.

7. Procédé selon l'une quelconque des Revendications 1 à 5, caractérisé en ce que l'on utilise comme surfactif, le chlorure de N-cétylpyridinium ou le chlorure de N-octadécylpyridinium.

8. Procédé selon l'une quelconque des Revendications 1 à 6, caractérisé en ce que l'on utilise le surfactif à raison de 1 à 10 fois la quantité équivalente, relativement à l'uranium.

9. Procédé selon l'une quelconque des Revendications 1 à 8, caractérisé en ce que l'on conduit le procédé en continu.

10. Procédé selon l'une quelconque des Revendications 1 à 7, caractérisé en ce que l'on utilise plusieurs cellules de flottation branchées en série et/ou en parallèle.

11. Procédé selon l'une quelconque des Revendications 1 à 9, caractérisé en ce que l'on utilise pour le moussage, un gaz inerte (tel que l'azote) ou l'air ou des bulles de gaz engendrées électrolytiquement.

12. Procédé selon l'une quelconque des Revendications 1 à 11, caractérisé en ce que la solution à traiter contient, outre de l'uranium, du fer, du calcium, de l'aluminium et/ou d'autres métaux à une faible concentration et éventuellement des ions fluorure.

13. Procédé selon l'une quelconque des Revendications 1 à 12, caractérisé en ce qu'en présence de $Fe^{3+}$, on réduit celui-ci en $Fe^{2+}$ avant de séparer l'uranium.

14. Installation pour la mise en oeuvre du procédé selon l'une quelconque des Revendications 1 à 12, caractérisée en ce qu'elle comprend un extracteur (1), un homogénéiseur (3) muni d'un agitateur (2), une cellule de flottation (4), un séparateur (5), un appareil de mise en suspension (6), un appareil de chauffage (7), un appareil de précipitation (8), un séparateur (9) et un appareil de traitement d'acide (10), les éléments (1), (3), (4), (5), (6), (7), (8) et (9) étant reliés entre eux dans cet ordre et l'appareil de traitement d'acide (10) étant branché entre la cellule de flottation (4) et l'extracteur (1).

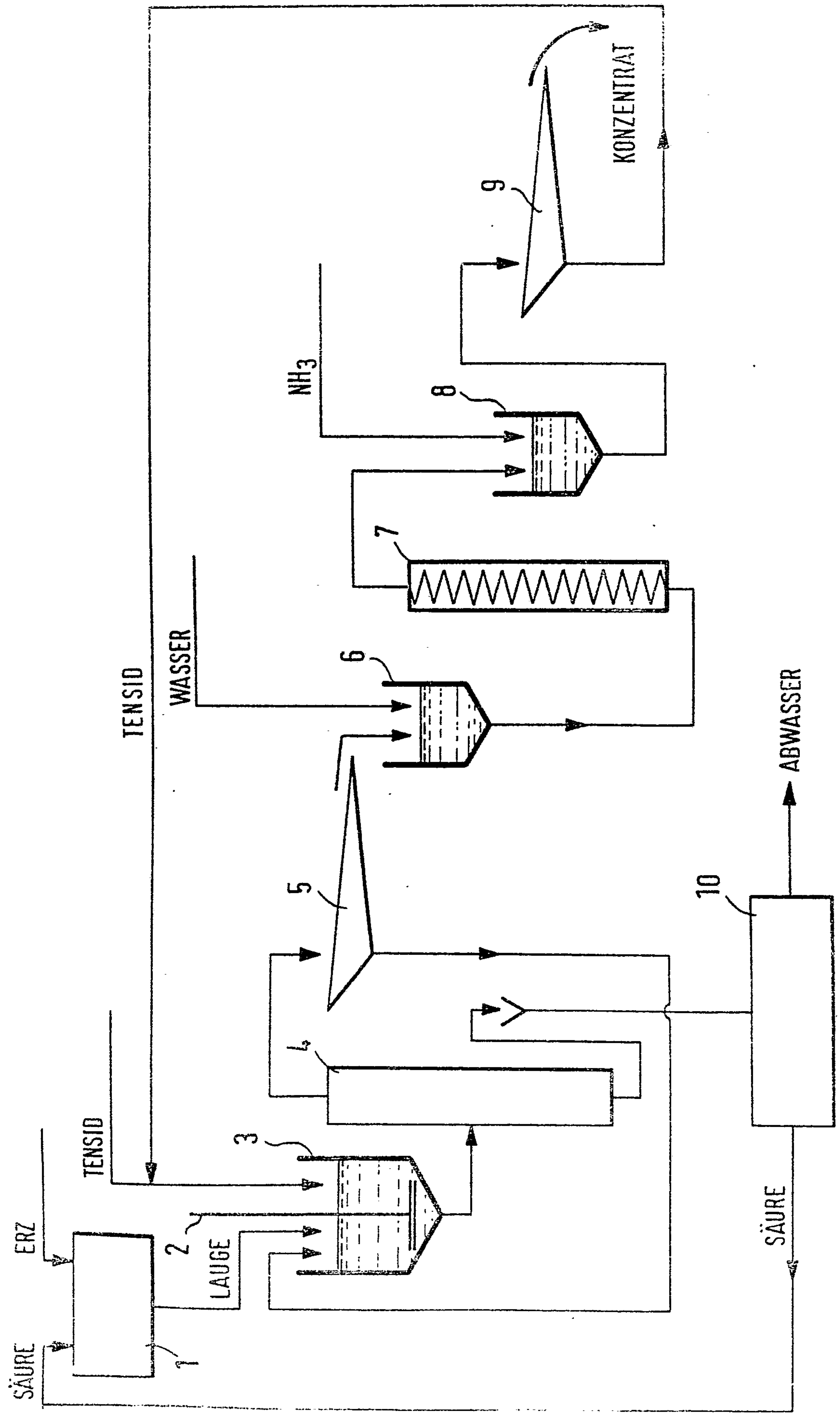

SÄURE
ERZ
1
LAUGE
2
TENSID
TENSID
3
4
5
WASSER
6
7
NH3
8
9
KONZENTRAT
10
ABWASSER
SÄURE